(19) Europäisches Patentamt
European Patent Office
Office européen des brevets

(11) EP 4 031 588 B1

(12) EUROPEAN PATENT SPECIFICATION

(45) Date of publication and mention of the grant of the patent:
**20.09.2023 Bulletin 2023/38**

(21) Application number: **20761250.8**

(22) Date of filing: **27.08.2020**

(51) International Patent Classification (IPC):
***C08F 10/06*** *(2006.01)* ***C08F 4/651*** *(2006.01)*
***C08F 4/654*** *(2006.01)*

(52) Cooperative Patent Classification (CPC):
(C-Sets available)
**C08F 10/06;** C08F 210/06 (Cont.)

(86) International application number:
**PCT/EP2020/073984**

(87) International publication number:
**WO 2021/052733 (25.03.2021 Gazette 2021/12)**

# (54) CATALYST COMPONENTS FOR THE POLYMERIZATION OF OLEFINS

KATALYSATORKOMPONENTEN ZUR POLYMERISIERUNG VON OLEFINEN

COMPOSANTS DE CATALYSEUR DE POLYMÉRISATION D'OLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2019 EP 19197698**

(43) Date of publication of application:
**27.07.2022 Bulletin 2022/30**

(73) Proprietor: **Basell Poliolefine Italia S.r.l.**
**20121 Milano (IT)**

(72) Inventors:
- **PIEMONTESI, Fabrizio**
  **44122 Ferrara (IT)**
- **MIGNOGNA, Alessandro**
  **44122 Ferrara (IT)**
- **LIGUORI, Dario**
  **44122 Ferrara (IT)**
- **MORINI, Giampiero**
  **44122 Ferrara (IT)**
- **DALL'OCCO, Tiziano**
  **44122 FERRARA (IT)**
- **VITALE, Gianni**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 712 875**
**WO-A1-2011/160936**
**US-A1- 2014 275 451**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 10/06, C08F 2/001;**
**C08F 10/06, C08F 4/651;**
**C08F 10/06, C08F 4/6543;**
C08F 110/06, C08F 2500/12, C08F 2500/15;
C08F 210/06, C08F 210/16, C08F 2500/12,
C08F 2500/15, C08F 2500/17, C08F 2500/27,
C08F 2500/30, C08F 2500/31, C08F 2500/35;
C08F 210/06, C08F 210/16, C08F 2500/12,
C08F 2500/15, C08F 2500/27, C08F 2500/30,
C08F 2500/31, C08F 2500/35

## Description

FIELD OF THE INVENTION

The present disclosure relates to Ziegler-Natta heterogeneous catalyst components for the polymerization of olefins, in particular propylene, comprising a Mg dihalide, a Ti compound having at least one Ti-halogen bond and at least two electron donor compounds selected from specific classes. The catalysts components are particularly suited for the preparation of heterophasic propylene copolymers.

BACKGROUND OF THE INVENTION

Most of the Ziegler-Natta polypropylene catalysts used nowadays are based on phthalate diesters as internal donors used in combination with an aluminium alkyl cocatalyst and with alkylalkoxysilanes as selectivity control agents (external donors) which ensure a high level of activity and stereospecificity. A particular type of these catalysts, those endowed with a relatively high porosity, are also used in the preparation of impact resistant propylene. Impact resistant propylene polymer compositions comprise a relatively high crystallinity propylene polymer fraction insoluble in xylene at 25°C, and a relatively low crystallinity copolymer fraction being soluble in xylene at 25°C. The propylene polymer compositions comprising two different polymers of different crystallinity are also called heterophasic copolymers. The relatively high crystallinity fraction may comprise a propylene homopolymer, or a random propylene copolymer with a relatively low amount of olefin comonomer, characterized by high isotacticity. The relatively low crystallinity fraction may comprise a propylene copolymer and particularly a propylene-ethylene copolymer having a content of ethylene ranging from 15 to 75% wt. The compositions can be prepared by several methods, including the mechanical blend of the two components. The preferred method however, is the preparation in-reactor by a sequence of polymerization step carried out in one or two reactors. In the first step propylene is copolymerized or copolymerized with a small amount of other olefins in order to produce the high crystallinity fraction, while in a second step, carried out under different polymerization conditions and in particular in a reaction mixture comprising a higher amount of olefin comonomer, it is produced the xylene soluble fraction.

This method is largely used and it is preferably carried out operating in two different reactors which can be of the same or different polymerization technology. In particular, the first stage can be carried out in a liquid phase reactor or in gas-phase reactor, while the second phase is commonly carried out in gas-phase in order to avoid the dissolution of the low crystallinity fraction in the reaction bath.

In this type of process, the catalyst plays a crucial role. The catalyst system should be able to produce a very isotactic propylene (co)polymer in the first step, while in the second should be able to produce a copolymer in which the olefin comonomer units are sufficiently distributed along and among the polymer chains in order to have a copolymer with a low crystallinity which confers impact resistance to the composition. In principle, the better is the quality of the low crystallinity copolymer, the lower is the amount of such copolymer needed to obtain a given value impact resistance. This means that for the same amount of low crystallinity copolymer in the composition, the better is the quality the higher would be the impact resistance.

The phthalate-based catalysts produce impact resistant propylene polymer compositions not entirely satisfying in terms of impact resistance. In addition, the toxicity problems that might be associated with the use of phthalates requires to evaluate alternatives for their replacement.

The European patent applications EP361494A2 and EP728769A1 describe very active solid catalyst components for the polymerization of olefins comprising, as an internal electron-donor compound, a 1,3-diether characterized by a specific structure. Notwithstanding the above mentioned catalysts are able to provide propylene polymers with high stereoregularity, it does not appears they are effective in producing impact resistant compositions with improved impact strength.

US2014/275451 A1 relates to solid catalyst components comprising titanium, magnesium, halogen and an internal electron donor compound containing at least one 9-(alkoxymethyl)-9H-fluorene compound.

It would therefore be of interest to find a catalyst capable of producing at the same time a highly stereoregular propylene polymer and a high-quality propylene copolymer so as to generate propylene polymer compositions with impact high impact strength.

The applicant has surprisingly found that a proper mixture of specific type and amounts of internal donors is able to give catalyst components producing propylene polymer compositions with high impact strength

SUMMARY OF THE INVENTION

Accordingly, one of the objects of the present patent application is a solid catalyst component for the polymerization of olefins comprising a magnesium halide, a titanium compound having at least a Ti-halogen bond and at least

two electron donor compounds one of which being selected from 1,3 diethers (DE) and the other being selected from dicarbamates (DC), wherein the catalyst component contains the electron donor compounds in a molar ratio DE:DC ranging from 4.5:1 to 20:1.

DETAILED DESCRIPTION OF THE INVENTION

Preferably, the DE:DC molar ratio ranges from 5:1 to 15:1 and more preferably from 7:1 to 10:1.

Preferably, the molar ratio between total amounts of donors (DE+DC) and the Ti atoms (DE+DC):Ti ranges from 0.3:1 to 1:1 and more preferably from 0.4:1 to 1:1.

Preferably, the solid catalyst component has a porosity of at least 0.150 $cm^3/g$, wherein the porosity is measured according to a mercury method based on the solid catalyst components having pores with radius equal to or less than 1 $\mu m$. More preferably, the porosity ranges from 0.20 to 0.5 $cm^3/g$.

The preferred dicarbamates are those belonging to of formula (I) :

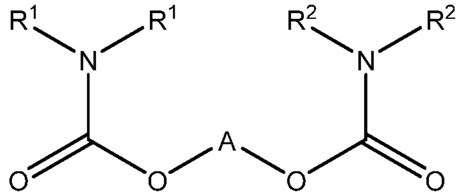

(I)

Where $R^1$ and $R^2$, independently, are selected from hydrogen and $C_1$-$C_{15}$ hydrocarbon groups, optionally contain a heteroatom selected from halogen, P, S, N, O and Si, which can be fused together to form one or more cycles and A is a bivalent bridging group.

Preferably, A is a bivalent bridging group with chain length between the two bridging bonds being 1-10 atoms. In case of cyclic structures acting as bridging groups the term "chain length" is referred to the shortest sequence of atoms bridging the oxygen atoms of formula (I). In a preferred general embodiment, the bridging group has formula $-(ZR^3m)n-$ in which, independently, Z is selected from C, Si, Ge, O, N, S or P, the $R^3$ groups, equal to or different from each other, are hydrogen or a $C_1$-$C_{20}$ hydrocarbon radicals, optionally containing a heteroatom selected from halogen, P, S, N,O and Si, which can be fused together to form one or more cycles, m is a number satisfying the valences of Z and n is an integer ranging from 1 to 10. Preferably, in the bridging group has formula $-(ZR^3m)n-$the atoms O, S, and N are not directly linked to the oxygen of formula (I), i.e. they are not the terminal atoms of the bridging group. Preferably, Z is selected from C and Si. In a more preferred embodiment, Z is carbon.

In a particular embodiment, the said bivalent bridging group is selected from the group consisting of aliphatic, alicyclic and aromatic bivalent radicals, optionally substituted with $C_1$-$C_{15}$ hydrocarbon groups and/or with heteroatoms selected from halogen, P, S, N, O and Si, and having a bridging chain length ranging from 1 to 6 atoms and especially from 1 to 4 atoms.

In a particularly preferred embodiment, the bridging group is an aliphatic or alicyclic bridging group having a bridging chain length of 2-3 carbon atoms. Among this class, particularly preferred bridging groups are those of formula $-(CR^4p)s-$ in which $R^4$ is, independently, hydrogen or a $C_1$-$C_{20}$ hydrocarbon radicals, optionally substituted with heteroatoms selected from halogen, P, S, N, O and Si, which can be fused together to form one or more cycles, p is a number satisfying the available valence of carbon and s is a number from 1 to 6 preferably from 1 to 4. Examples of bridging groups are methylidene, 4-ethane-1,2-diyl, butane-2,3-diyl, pentane-2,4-diyl, 2,2-diisobutylpropane-1,3-diyl, cyclohexane-1,2-diyl, cyclopentane -1,2-diyl.

Another class of preferred bridging group is the one based on cyclic aromatic groups which through the carbon ring atoms can link the two oxygen of formula (I). Among them, particularly preferred are the phenyl groups, optionally substituted with halogens or $C_1$-$C_{20}$ alkyl radicals, bridging the oxygen atoms in position 1,2 or 1,3 or 1,4 and the naphthalene groups, optionally substituted bridging the oxygen groups in position 1,2 or, 2,3 or, 1,8. Among them, particularly preferred are the structure of formula (II) below

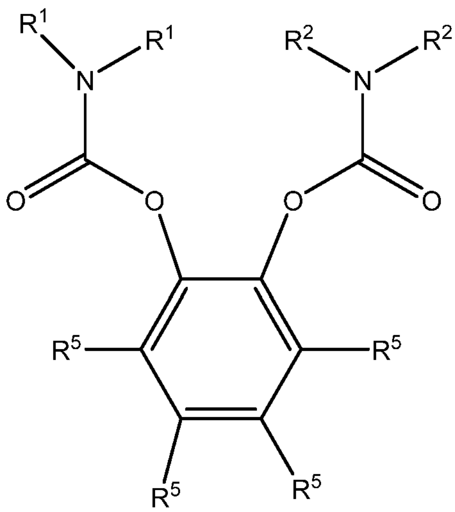

(II)

In which $R^1$ and $R^2$ have the same meaning previously specified, and $R^5$, independently, is selected from hydrogen, halogens or $C_1$-$C_{15}$ hydrocarbon groups optionally substituted with heteroatoms selected from halogen, P, S, N, O and Si, with the proviso that at least one of $R^5$ is different from hydrogen.

Preferred structures of formula (II) are those in which the $R^5$ groups in position 3,5 and/or 6 are $C_1$-$C_5$ alkyl groups. Particularly preferred is the substitution in position 3 with a primary alkyl group especially methyl, and in position 5 with a tertiary alkyl group especially tert-butyl.

Specific examples are 1,2-phenylene, 3-methyl-1,2-phenylene, 4-chloro-1,2-phenylene, 4-(tert-butyl)-1,2-phenylene, 3,6-dimethyl-1,2-phenylene, 3,5-dimethyl-1,2-phenylene, 5-(tert-butyl)-3-methyl-1,2-phenylene, 3,5-diisopropyl-1,2-phenylene, naphthalene-1,8-diyl, naphthalene-1,2-diyl, naphthalene-2,3-diyl groups.

Preferably, in the formulas (I) and (II) the $R^1$-$R^2$ groups are independently selected from hydrogen, $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups. More preferably, $R^1$ and $R^2$ are selected from hydrogen or $C_1$-$C_{10}$ alkyl groups and even more preferably from hydrogen or $C_1$-$C_5$ alkyl groups in particular ethyl. In one preferred embodiment hydrogen and ethyl are preferred. In one particularly preferred embodiment, both $R^1$ and $R^2$ are ethyl.

Preferably, the final amount of electron donor compound in the solid catalyst component ranges from 1 to 25% by weight preferably in the range from 3 to 20% by weight.

Examples of structures of formulas (I) and (II) are the following: 1,2-diphenylethane-1,2-diyl dicarbamate, 1-phenylbutane-1,2-diyl dicarbamate, 1-phenylethane-1,2-diyl dicarbamate, 1-phenylpropane-1,2-diyl dicarbamate, 2,5-dimethylhexane-3,4-diyl dicarbamate, 2-methylhexane-3,4-diyl dicarbamate, 3-methyl-1-phenylbutane-1,2-diyl dicarbamate, 3-methylbutane-1,2-diyl dicarbamate, 4-methylpentane-2,3-diyl dicarbamate, butane-1,2-diyl dicarbamate, butane-2,3-diyl dicarbamate, ethane-1,2-diyl dicarbamate, hexane-3,4-diyl dicarbamate, pentane-2,3-diyl dicarbamate, propane-1,2-diyl dicarbamate, 2,5-dimethylhexane-3,4-diyl bis(dimethylcarbamate), 2-methylhexane-3,4-diyl bis(dimethylcarbamate), 3-methylbutane-1,2-diyl bis(dimethylcarbamate), 4-methylpentane-2,3-diyl bis(dimethylcarbamate), butane-1,2-diyl bis(dimethylcarbamate), butane-2,3-diyl bis(dimethylcarbamate), ethane-1,2-diyl bis(dimethylcarbamate), hexane-3,4-diyl bis(dimethylcarbamate), pentane-2,3-diyl bis(dimethylcarbamate), propane-1,2-diyl bis(dimethylcarbamate), 2,5-dimethylhexane-3,4-diyl bis(diethylcarbamate), 2-methylhexane-3,4-diyl bis(diethylcarbamate), 3-methylbutane-1,2-diyl bis(diethylcarbamate), 4-methylpentane-2,3-diyl bis(diethylcarbamate), butane-1,2-diyl bis(diethylcarbamate), butane-2,3-diyl bis(diethylcarbamate), ethane-1,2-diyl bis(diethylcarbamate), hexane-3,4-diyl bis(diethylcarbamate), pentane-2,3-diyl bis(diethylcarbamate), propane-1,2-diyl bis(diethylcarbamate), 2,5-dimethylhexane-3,4-diyl bis(diisopropylcarbamate), 2-methylhexane-3,4-diyl bis(diisopropylcarbamate), 3-methylbutane-1,2-diyl bis(diisopropylcarbamate), 4-methylpentane-2,3-diyl bis(diisopropylcarbamate), butane-1,2-diyl bis(diisopropylcarbamate), butane-2,3-diyl bis(diisopropylcarbamate), ethane-1,2-diyl bis(diisopropylcarbamate), hexane-3,4-diyl bis(diisopropylcarbamate), pentane-2,3-diyl bis(diisopropylcarbamate), propane-1,2-diyl bis(diisopropylcarbamate), 2,5-dimethylhexane-3,4-diyl bis(pyrrolidine-1-carboxylate), 2-methylhexane-3,4-diyl bis(pyrrolidine-1-carboxylate), 3-methylbutane-1,2-diyl bis(pyrrolidine-1-carboxylate), 4-methylpentane-2,3-diyl bis(pyrrolidine-1-carboxylate), butane-1,2-diyl bis(pyrrolidine-1-carboxylate), butane-2,3-diyl bis(pyrrolidine-1-carboxylate), ethane-1,2-diyl bis(pyrrolidine-1-carboxylate), hexane-3,4-diyl bis(pyrrolidine-1-carboxylate), pentane-2,3-diyl bis(pyrrolidine-1-carboxylate), propane-1,2-diyl bis(pyrrolidine-1-carboxylate), 2,5-dimethylhexane-3,4-diyl bis(diphenylcarbamate), 2-methylhexane-3,4-diyl bis(diphenylcarbamate), 3-methylbutane-1,2-diyl bis(diphenylcarbamate), 4-methylpentane-2,3-diyl bis(diphenylcarbamate), butane-1,2-diyl bis(diphenylcarbamate), butane-2,3-diyl bis(diphenylcarbamate), ethane-1,2-diyl bis(diphenylcarbamate), hexane-3,4-diyl bis(diphenylcarbamate), pentane-2,3-diyl bis(diphenylcarbamate), propane-1,2-diyl bis(diphenylcarbamate), cyclohexane-1,2-diyl bis(pyrrolidine-1-carboxylate), cyclohexane-1,2-diyl bis(diethylcarbamate), cyclohexane-1,2-diyl bis(diisopropylcarbamate), cyclohexane-1,2-diyl bis(dimethylcarbamate), cyclohexane-1,2-diyl bis(diphenylcarbamate), cyclohexane-1,2-diyl dicarbamate, 2,3-dimethylbutane-2,3-diyl bis(pyrrolidine-1-carboxylate), 2,3-dimethylbutane-2,3-diyl bis(diethylcarbamate), 2,3-dimethylbutane-2,3-diyl bis(diisopropylcarbamate), 2,3-dimethylbutane-2,3-diyl bis(dimethylcarbamate), 2,3-dimethylbutane-2,3-diyl bis(diphenylcarbamate), 2,3-dimethylbutane-2,3-diyl dicarbamate, pentane-2,4-diyl bis(pyrrolidine-1-carboxylate), pentane-2,4-diyl bis(diethylcarbamate), pentane-2,4-diyl bis(diisopropylcarbamate), pentane-2,4-diyl bis(dimethylcarbamate), pentane-2,4-diyl bis(diphenylcarbamate), pentane-2,4-diyl dicarbamate, propane-1,3-diyl bis(pyrrolidine-1-carboxylate), pentane-2,4-diyl bis(dimethylcarbamate), pentane-2,4-diyl dicarbamate, propane-1,3-diyl bis(diethylcarbamate), propane-1,3-diyl bis(diisopropylcarbamate), propane-1,3-diyl bis(diphenylcarbamate), 2,2-dimethylpropane-1,3-diyl bis(pyrrolidine-1-carboxylate), 2,2-dimethylpropane-1,3-diyl bis(diethylcarbamate), 2,2-dimethylpropane-1,3-diyl bis(diisopropylcarbamate), 2,2-dimethylpropane-1,3-diyl bis(dimethylcarbamate), 2,2-dimethylpropane-1,3-diyl bis(diphenylcarbamate), 2,2-dimethylpropane-1,3-diyl dicarbamate, 2,2-diisopropylpropane-1,3-diyl bis(pyrrolidine-1-carboxylate), 2,2-diisopropylpropane-1,3-diyl bis(diethylcarbamate), 2,2-diisopropylpropane-1,3-diyl bis(diisopropylcarbamate), 2,2-diisopropylpropane-1,3-diyl bis(dimethylcarbamate), 2,2-diisopropylpropane-1,3-diyl bis(diphenylcarbamate), 2,2-diisopropylpropane-1,3-diyl dicarbamate, 2,2-diisobutylpropane-1,3-diyl bis(pyrrolidine-1-carboxylate), 2,2-diisobutylpropane-1,3-diyl bis(diethylcarbamate), 2,2-diisobutylpropane-1,3-diyl bis(diisopropylcarbamate), 2,2-diisobutylpropane-1,3-diyl bis(dimethylcarbamate), 2,2-diisobutylpropane-1,3-diyl bis(diphenylcarbamate), 2,2-diisobutylpropane-1,3-diyl dicarbamate, (9H-fluorene-9,9-diyl)bis(methylene) bis(pyrrolidine-1-carboxylate), (9H-fluorene-9,9-diyl)bis(methylene) bis(diethylcarbamate), (9H-fluorene-9,9-diyl)bis(methylene) bis(diisopropylcarbamate), (9H-fluorene-9,9-diyl)bis(methylene) bis(diphenylcarbamate), pentane-2,4-diyl bis(dimethylcarbamate), pentane-2,4-diyl dicarbamate, (diethylsilanediyl)bis(methylene) bis(diethylcarbamate), (dimethylsilanediyl)bis(methylene) bis(diethylcarbamate), (ethyl(methyl)silanediyl)bis(methylene) bis(diethylcarbamate), (isobutyl(methyl)silanediyl)bis(methylene) bis(diethylcarbamate), 2-(hydroxymethyl)phenol bis(pyrrolidine-1-carboxylate), 2-(hydroxymethyl)phenol bis(diethylcarbamate), 2-(hydroxymethyl)phenol bis(diisopropylcarbamate), 2-(hydroxymethyl)phenol bis(dimethylcarbamate), 2-(hydroxymethyl)phenol bis(diphenylcarbamate), 2-(hydroxymethyl)phenol dicarbamate, 2,3-diisopropylbutane-1,4-diyl bis(pyrrolidine-1-carboxylate), 2,3-diisopropylbutane-1,4-diyl bis(diethylcarbamate), 2,3-diisopropylbutane-1,4-diyl bis(diisopropylcarbamate), 2,3-diisopropylbutane-1,4-diyl bis(dimethylcarbamate), 2,3-diisopropylbutane-1,4-diyl bis(diphenylcarbamate), 2,3-diisopropylbutane-1,4-diyl dicarbamate, [1,1'-biphenyl]-2,2'-diyl bis(pyrrolidine-1-carboxylate), [1,1'-biphenyl]-2,2'-diyl bis(diethylcarbamate), [1,1'-biphenyl]-2,2'-diyl bis(diisopropylcarbamate), [1,1'-biphenyl]-2,2'-diyl bis(dimethylcarbamate), [1,1'-biphenyl]-2,2'-diyl bis(diphenylcarbamate), [1,1'-biphenyl]-2,2'-diyl dicarbamate, 1,2-phenylenebis(methylene) bis(pyrrolidine-1-carboxylate), 1,2-phenylenebis(methylene) bis(diethylcarbamate), 1,2-phenylenebis(methylene) bis(diisopropylcarbamate), 1,2-phenylenebis(methylene) bis(dimethylcarbamate), 1,2-phenylenebis(methylene) bis(diphenylcarbamate), 1,2-phenylenebis(methylene) dicarbamate, 1,2-phenylene bis(pyrrolidine-1-carboxylate), 1,2-phenylene bis(diethylcarbamate), 1,2-phenylene bis(diisopropylcarbamate), 1,2-phenylene bis(dimethylcarbamate), 1,2-phenylene bis(diphenylcarbamate), 1,2-phenylene dicarbamate, 3-methyl-1,2-phenylene bis(pyrrolidine-1-carboxylate), 3-methyl-1,2-phenylene bis(diethylcarbamate), 3-methyl-1,2-phenylene bis(diisopropylcarbamate), 3-methyl-1,2-phenylene bis(dimethylcarbamate), 3-methyl-1,2-phenylene bis(diphenylcarbamate), 3-methyl-1,2-phenylene dicarbamate, 3,5-dimethyl-1,2-phenylene bis(pyrrolidine-1-carboxylate), 3,5-dimethyl-1,2-phenylene bis(diethylcarbamate), 3,5-dimethyl-1,2-phenylene bis(diisopropylcarbamate), 3,5-dimethyl-1,2-phenylene bis(dimethylcarbamate), 3,5-dimethyl-1,2-phenylene bis(diphenylcarbamate), 3,5-dimethyl-1,2-phenylene dicarbamate, 3,6-dimethyl-1,2-phenylene bis(pyrrolidine-1-carboxylate), 3,6-dimethyl-1,2-phenylene bis(diethylcarbamate), 3,6-dimethyl-1,2-phenylene bis(diisopropylcarbamate), 3,6-dimethyl-1,2-phenylene bis(dimethylcarbamate), 3,6-dimethyl-1,2-phenylene bis(diphenylcarbamate), 3,6-dimethyl-1,2-phenylene dicarbamate, 5-(tert-butyl)-3-methyl-1,2-phenylene bis(pyrrolidine-1-carboxylate), 5-(tert-butyl)-3-methyl-1,2-phenylene bis(diethylcarbamate), 5-(tert-butyl)-3-methyl-1,2-phenylene bis(diisopropylcarbamate), 5-(tert-butyl)-3-methyl-1,2-phenylene bis(dimethylcarbamate), 5-(tert-butyl)-3-methyl-1,2-phenylene bis(diphenylcarbamate), 5-(tert-butyl)-3-methyl-1,2-phenylene dicarbamate, 3,5-di-tert-butyl-1,2-phenylene bis(pyrrolidine-1-carboxylate), 3,5-di-tert-butyl-1,2-phenylene bis(diethylcarbamate), 3,5-di-tert-butyl-1,2-phenylene bis(diisopropylcarbamate), 3,5-di-tert-butyl-1,2-phenylene bis(dimethylcarbamate), 3,5-di-tert-butyl-1,2-phenylene bis(diphenylcarbamate), 3,5-di-tert-butyl-1,2-phenylene dicarbamate, 4-(tert-butyl)-1,2-phenylene bis(pyrrolidine-1-carboxylate), 4-(tert-butyl)-1,2-phenylene bis(diethylcarbamate), 4-(tert-butyl)-1,2-phenylene bis(diisopropylcarbamate), 4-(tert-butyl)-1,2-phenylene bis(dimethylcarbamate), 4-(tert-butyl)-1,2-phenylene bis(diphenylcarbamate), 4-(tert-butyl)-1,2-phenylene dicarbamate, 3-isopropyl-6-methyl-1,2-phenylene bis(pyrrolidine-1-carboxylate), 3-isopropyl-6-methyl-1,2-phenylene bis(diethylcarbamate), 3-isopropyl-6-methyl-1,2-phenylene bis(diisopropylcarbamate), 3-isopropyl-6-methyl-1,2-phenylene bis(dimethylcarbamate), 3-isopropyl-6-methyl-1,2-phenylene bis(diphenylcarbamate), 3-isopropyl-6-methyl-1,2-phenylene dicarbamate, 4-chloro-1,2-phenylene bis(pyrrolidine-1-carboxylate), 4-chloro-1,2-phenylene bis(diethylcarbamate), 4-chloro-1,2-phenylene bis(diisopropylcarbamate), 4-chloro-1,2-phenylene bis(dimethylcarbamate), 4-chloro-1,2-phenylene bis(diphenylcarbamate), 4-chloro-1,2-phenylene dicarbamate, naphthalene-2,3-diyl bis(diethylcarbamate), naphthalene-2,3-diyl bis(diisopropylcarbamate), naphthalene-2,3-diyl bis(dimethylcarbamate), naphthalene-2,3-diyl dicarbamate, naphthalene-1,2-diyl bis(diethylcarbamate), naphthalene-1,2-diyl bis(diisopropylcarbamate), naphthalene-1,2-diyl bis(dimethylcarbamate), naphthalene-1,2-diyl dicarbamate, naphthalene-1,8-diyl bis(diethylcarbamate), naphthalene-1,8-diyl bis(diisopropylcarbamate), naphthalene-1,8-diyl bis(dimethylcarbamate), naphthalene-1,8-diyl dicarbamate.

Among the 1,3-diethers (DE) mentioned above, particularly preferred are the compounds of formula (III)

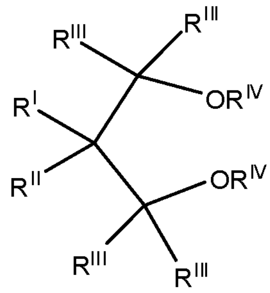

(III)

where $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

Preferably, $R^{IV}$ is a 1-6 carbon atom alkyl radical and more particularly a methyl while the $R^{III}$ radicals are preferably hydrogen. Moreover, when $R^I$ is methyl, ethyl, propyl, or isopropyl, $R^{II}$ can be ethyl, propyl, isopropyl, butyl, isobutyl, tert-butyl, isopentyl, 2-ethylhexyl, cyclopentyl, cyclohexyl, methylcyclohexyl, phenyl or benzyl; when $R^I$ is hydrogen, $R^{II}$ can be ethyl, butyl, sec-butyl, tert-butyl, 2-ethylhexyl, cyclohexylethyl, diphenylmethyl, p-chlorophenyl, 1-naphthyl, 1-decahydronaphthyl; $R^I$ and $R^{II}$ can also be the same and can be ethyl, propyl, isopropyl, butyl, isobutyl, tert-butyl, neopentyl, phenyl, benzyl, cyclohexyl, cyclopentyl.

Specific examples of ethers that can be used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyll-1,3-dimethoxypropane, 2,2-dipropyl-1,3-dimethoxypropane, 2,2-di-n-butyl-1,3-dimethoxypropane, 2,2-diethyll-1,3-diethoxypropane, 2,2-dicyclopentyl-1,3-dimethoxypropane, 2,2-dipropyl-1,3-diethoxypropane, 2,2-di-n-butyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane, 2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3 -dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (IV)

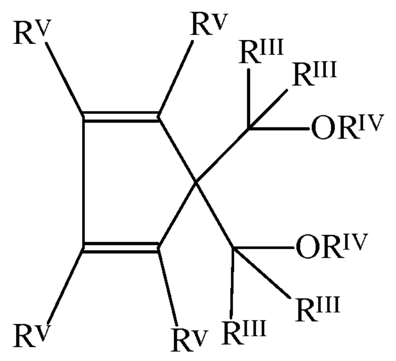

(IV)

where the radicals $R^{IV}$ have the same meaning explained above and the radicals $R^{III}$ and $R^{V}$ radicals, equal or different to each other, are selected from the group consisting of hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ arylalkyl radicals and two or more of the $R^{V}$ radicals can be bonded to each other to form condensed cyclic structures, saturated or unsaturated, optionally substituted with $R^{VI}$ radicals selected from the group consisting of halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ arylalkyl radicals; said radicals $R^{V}$ and $R^{VI}$ optionally containing one or more heteroatoms as substitutes for carbon or hydrogen atoms, or both.

Preferably, in the 1,3-diethers of formulae (III) and (IV) all the $R^{III}$ radicals are hydrogen, and all the $R^{IV}$ radicals are methyl. Moreover, are particularly preferred the 1,3-diethers of formula (II) in which two or more of the $R^{V}$ radicals are bonded to each other to form one or more condensed cyclic structures, preferably benzenic, optionally substituted by $R^{VI}$ radicals. Expecially preferred are the compounds of formula (V):

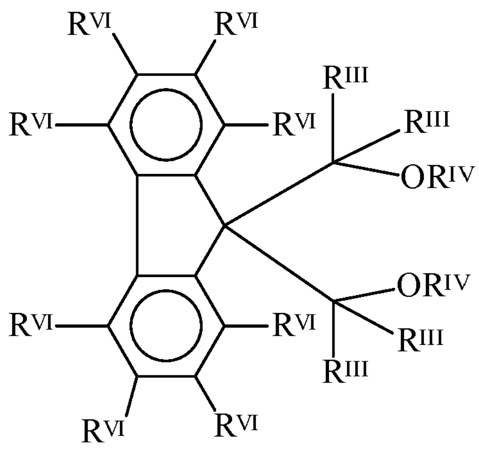

(V)

where the $R^{VI}$ radicals equal or different are hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ arylalkyl radicals, optionally containing one or more heteroatoms selected from the group consisting of N, 0, S, P, Si and halogens, in particular Cl and F, as substitutes for carbon or hydrogen atoms, or both; the radicals $R^{III}$ and $R^{IV}$ are as defined above for formula (V).

Specific examples of compounds comprised in formulae (IV) and (V) are:

1,1 -bis(methoxymethyl)-cyclopentadiene;
1,1-bis(methoxymethyl)-2,3,4, 5-tetramethylcyclopentadiene;
1,1-bis(methoxymethyl)-2,3,4, 5-tetraphenylcyclopentadiene;
1,1-bis(methoxymethyl)-2,3,4, 5-tetrafluorocyclopentadiene;
1,1-bis(methoxymethyl)-3,4-dicyclopentylcyclopentadiene;
1,1-bis(methoxymethyl)indene; 1,1-bis(methoxymethyl)-2,3-dimethylindene;
1,1-bis(methoxymethyl)-4, 5,6,7-tetrahydroindene;

1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethyilsilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1, 8-dichlorofluorene;
9,9-bis(methoxymethyl)-2,7-dicyclopentylfluorene;
9,9-bis(methoxymethyl)-1, 8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

As explained above, the catalyst component of the disclosure comprises, in addition to the above electron donors, a titanium compound having at least a Ti-halogen bond and a Mg halide. The preferred titanium compounds used in the catalyst component of the present disclosure are $TiCl_4$ and $TiCl_3$; furthermore, also Ti-haloalcoholates of formula $Ti(OR)_{n-y}X_y$ can be used, where n is the valence of titanium, y is a number between 1 and n-1 X is halogen and R is a hydrocarbon radical having from 1 to 10 carbon atoms.

The final amount of Ti atoms with respect to the total amount of catalyst component can range from 1 to 10%wt preferably from 1.2 to 7%wt.

Preferably, the said catalyst component has an average particle size ranging from 20 to 150μm and more preferably from 40 to 100 μm.

The preparation of the solid catalyst component can be carried out according to several methods. According to the preferred method the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2pROH$, where p is a number between 0.1 and 2, and R is a hydrocarbon radical having 1-18 carbon atoms, said reaction being carried out in the presence of the two electron donors that can be added simultaneously or in sequence. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Example of spherical adducts prepared according to this procedure are described in USP 4,399,054 and USP 4,469,648. The so obtained adduct is then subject to thermal controlled dealcoholation (80-130°C) so as to obtain an adduct in which the number of moles of alcohol is preferably lower than 2, preferably between 0.1 and 1.5.

In the preferred method of producing the catalyst of the disclosure, the reaction with the Ti compound can be carried out by suspending the adduct (dealcoholated or as such) in cold $TiCl_4$ generally at 0°C. Preferably the adduct is used in an amount such as to have a concentration ranging from 20 to 100 g/l, and preferably from 30 to 90 g/l. According to a preferred embodiment, the 1,3-diether and the dicarbamate are added to the system at the beginning of

this stage of reaction and preferably when the temperature of the mixture is in the range of -10° to 20°C. In a preferred embodiment, the 1,3 diether is added first. The electron donors are used in amounts such as to meet the desired DE:DC molar ratio in the final catalyst taking into account the respective efficiency in being fixed on the catalyst. In an embodiment the Mg/diether (Mg/DE) molar ratio may range from 3:1 to 10:1 and preferably from 4:1 to 9:1, while the Mg/dicarbamate (Mg/DC) molar ratio may range from 25:1 to 200:1 and preferably from 30:1 to 180:1. The combined DE/DC molar ratio employed in catalyst preparation can preferably range from 4.5:1 to 20:1. The temperature is then gradually raised up until reaching a temperature ranging from 90-130°C and kept at this temperature for 0.5-3 hours.

After completing the reaction time stirring is stopped, the slurry is let to settle, and liquid phase removed. A second stage of treatment with $TiCl_4$ is performed, preferably carried out at a temperature ranging from 70 to 110°C. After completing the reaction time, stirring is stopped, the slurry is let to settle, and liquid phase removed. It is possible, although not necessary, to carry out additional reaction stage with the titanium compound and preferably with $TiCl_4$ under the same conditions described above and in the absence of electron donors. The so obtained solid can then be washed with liquid hydrocarbon under mild conditions and then dried. Preferably, the final amount of the total donors (DE+DC) in the solid catalyst component ranges from 5 to 30%wt preferably from 7 to 25%wt.

The solid catalyst components according to the present disclosure are converted into catalysts for the polymerization of olefins by reacting them with organoaluminum compounds.

In particular, it is an object of the present disclosure a catalyst for the polymerization of olefins $CH_2$=CHR, in which R is hydrogen or a hydrocarbyl radical with 1-12 carbon atoms, comprising the product obtained by contacting:

(i) the solid catalyst component as disclosed above and
(ii) an alkylaluminum compound and, optionally,
(iii) an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminum compounds.

Examples of external electron-donor compounds (iii) include silicon compounds, ethers, esters, amines, heterocyclic compounds and particularly 2,2,6,6-tetramethylpiperidine and ketones.

Another class of preferred external donor compounds is that of silicon compounds of formula $(R_7)a(R_8)bSi(OR_9)c$, where a and b are integers from 0 to 2, c is an integer from 1 to 4 and the sum (a+b+c) is 4; $R_7$, $R_8$, and $R_9$, are alkyl, cycloalkyl or aryl radicals with 1-18 carbon atoms optionally containing heteroatoms. Particularly preferred are the silicon compounds in which a is 1, b is 1, c is 2, at least one of $R_7$ and $R_8$ is selected from branched alkyl, cycloalkyl or aryl groups with 3-10 carbon atoms optionally containing heteroatoms and $R_9$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, $R_8$ is a branched alkyl or cycloalkyl group, optionally containing heteroatoms, and $R_9$ is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said electron donor compound (iii) of from 0.1:1 to 500:1, preferably from 1:1 to 300:1 and more preferably from 3:1 to 100:1.

Therefore, it constitutes a further object of the present disclosure a process for the (co)polymerization of olefins $CH_2$=CHR, in which R is hydrogen or a hydrocarbyl radical with 1-12 carbon atoms, carried out in the presence of a catalyst comprising the product of the reaction between:

(i) the solid catalyst component as previously defined;
(ii) an alkylaluminum compound and,
(iii) optionally an electron-donor compound (external donor).

The polymerization process can be carried out in slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The catalyst of the present disclosure can be used as such in the polymerization process by introducing it directly into the reactor. In a preferred embodiment, the catalyst can be pre-polymerized before being introduced into

the first polymerization reactor. The term pre-polymerized as used in the art, means a catalyst which has been subject to a polymerization step at a low conversion degree. According to the present disclosure a catalyst is considered to be pre-polymerized when the amount the polymer produced is from about 0.1 up to about 1000 g per gram of solid catalyst component.

The pre-polymerization can be carried out with the $\alpha$-olefins selected from the same group of olefins disclosed before. In particular, it is especially preferred pre-polymerizing ethylene or mixtures thereof with one or more $\alpha$-olefins in an amount up to 20% by mole. Preferably, the conversion of the pre-polymerized catalyst component is from about 0.2 g up to about 500 g per gram of solid catalyst component.

The pre-polymerization step can be carried out at temperatures from 0° to 80°C preferably from 5° to 50°C in liquid or gas-phase. The pre-polymerization step can be performed in-line as a part of a continuous polymerization process or separately in a batch process. The batch pre-polymerization of the catalyst of the disclosure with ethylene in order to produce an amount of polymer ranging from 0.5 to 20 g per gram of catalyst component is particularly preferred.

The polymerization may be carried out at temperature of from 20 to 120°C, preferably of from 40 to 80°C. When the polymerization is carried out in gas-phase the operating pressure may range from 0.5 to 5 MPa, preferably between 1 and 4 MPa. In the bulk polymerization the operating pressure may range between 1 and 8 MPa, preferably between 1.5 and 5 MPa.

The preferred alpha-olefins to be (co)polymerized are ethylene, propylene, butene-1, 4-methyl-1-pentene and hexene-1. In particular, the above described catalysts have been used in the (co)polymerization of propylene and ethylene to prepare different kinds of products. For example the following products can be prepared: high density ethylene polymers (HDPE, having a density higher than 0.940 g/cm$^3$), comprising ethylene homopolymers and copolymers of ethylene with alpha-olefins having 3-12 carbon atoms; linear low density polyethylenes (LLDPE, having a density lower than 0.940 g/cm$^3$) and very low density and ultra low density (VLDPE and ULDPE, having a density lower than 0.920 g/cm$^3$, to 0.880 g/cm$^3$ consisting of copolymers of ethylene with one or more alpha-olefins having from 3 to 12 carbon atoms, having a mole content of units derived from the ethylene higher than 80%; elastomeric copolymers of ethylene and propylene and elastomeric terpolymers of ethylene and propylene with smaller proportions of a diene having a content by weight of units derived from the ethylene comprised between about 30 and 70%.

In particular, when used in the preparation of propylene homopolymer the catalyst of the present disclosure offer an improved balance of activity and stereospcificity.

Moreover, when used in the preparation of random propylene copolymers are able to produce random propylene/ethylene copolymers having outstanding long time creep behavior.

As mentioned above, these catalysts can produce high impact resistance polymer compositions comprising (A) a crystalline propylene homo or copolymer matrix and, in certain applications more than 50%wt, of (B) a low crystallinity, highly soluble in xylene, propylene-ethylene based copolymer.

Such polymer compositions can preferably be prepared in a multistep process comprising at least two different polymerization stages carried out in different reactors. In the first step, in which the crystalline propylene homo or copolymer is prepared, can be carried out either in gas-phase or in liquid phase. The gas-phase polymerization can be carried out in a fluidized or stirred, fixed bed reactor or in a gas-phase reactor comprising two interconnected polymerization zones one of which, working under fast fluidization conditions and the other in which the polymer flows under the action of gravity. The liquid phase process can be either in slurry, solution or bulk (liquid monomer). This latter technology is the most preferred and can be carried out in various types of reactors such as continuous stirred tank reactors, loop reactors or plug-flow ones. Preferably, the first step is carried out in gas-phase. In this stage and/or in the successive stage, hydrogen can be used as a molecular weight regulator. The propylene polymer obtained in this stage has a xylene insolubility preferably higher than 90% and more preferably higher than 95%, an isotactic index in terms of content of isotactic pentads (determined with $C^{13}$-NMR on the whole polymer) higher than 93%.

In the second stage of the polymerization process, the propylene-ethylene copolymer (B) is produced preferably in a conventional fluidized-bed gas-phase reactor in the presence of the polymeric material and the catalyst system coming from the preceding polymerization step.

The polymer produced in this stage may contain from 15 to 75% wt of ethylene, optionally containing minor proportions of a diene, and is for at least 60%wt soluble in xylene at room temperature. As reported in the examples, the catalyst of the present disclosure can produce impact copolymer compositions having, for the same amount of copolymer B, higher impact properties, evidenced by higher values of Charpy index, with respect to compositions obtained with different catalysts.

The following examples are given to illustrate the scope of the disclosure itself.

## CHARACTERIZATION

### Determination of X.I.

About 2.5 grams of polymer and 250 ml of o-xylene were placed in a roundbottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and the X.I. % is calculated by difference to 100 %.

### $^{13}C$ NMR of propylene/ethylene copolymers

The $^{13}C$ NMR spectra of random and heterophasic copolymers were acquired on a Bruker AV-600 spectrometer equipped with cryoprobe, operating at 160.91 MHz in the Fourier transform mode at 120°C..

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-$d_2$ at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta} / S \qquad PPE = 100\ T_{\beta\delta} / S \qquad EPE = 100\ T_{\delta\delta} / S$$

$$PEP = 100\ S_{\beta\beta} / S \qquad PEE = 100\ S_{\beta\delta} / S \qquad EEE = 100\ (0.25\ S_{\gamma\delta} + 0.5\ S_{\delta\delta}) / S$$

Where $S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$

The molar percentage of ethylene content was evaluated as:

$$E\%\ mol = 100 \times [PEP+PEE+EEE]$$

The weight percentage of ethylene content was evaluated as:

$$E\ \%wt = 100 \times MW_E \times E\%\ mol / (MW_E \times E\%\ mol + MW_P \times P\%\ mol)$$

where P% mol is the molar percentage of propylene content, while $MW_E$ and $MW_P$ are the molecular weights of ethylene and propylene, respectively.

### Determination of Intrinsic Viscosity (I.V.)

The sample is dissolved in tetrahydronaphthalene (THN) at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

**Determination of I.V. and ethylene content in the amorphous fraction of HECO samples**

The Intrinsic Viscosity (I.V.) and ethylene content of amorphous fraction of HECO samples were determined using the CRYSTEX QC apparatus (PolymerChar) equipped with the IR4 infrared detector and a capillary viscometer.

This automated fractionation method is useful for the analysis of HECO samples as it quickly provides the relative amount of crystalline and amorphous fractions and a measure of I.V. and ethylene content on both fractions and on whole sample. A description of the technique is reported in: B. Monrabal, P. del Hierro "Soluble Fraction Analysis in Polypropylene for Quality Control Laboratories", The Application Notebook (December 02, 2013) p. 709-710.

Prior to the analysis, the IR4 infrared detector (used for determination of relative amounts of Soluble and Insoluble fractions and their ethylene content) and the capillary viscometer (used to determine the I.V. of the fractions and of the whole sample) of Crystex QC apparatus were calibrated using samples having known ethylene content and I.V. value determined using the methods described above.

About 1.3 g of polymer were transferred in the vial connected to the machine. The standard analysis method provided by PolymerChar was applied and 100 mL of 1,2,4-trichlorobenzene (TCB) was used as fractionation solvent. The analysis cycle comprises the following steps:

(1) sample dissolution, analysis of solution concentration, I.V. and ethylene content of the sample;
(2) crystallization at 40 °C, separation of the soluble fraction and analysis for concentration, I.V. and ethylene content;
(3) dissolution of crystalline fraction and its analysis for concentration, I.V. and ethylene content.

As the values of I.V. obtained from the analysis are determined in trichlorobenzene, the more common I.V. values in THN were calculated using the relation:

$$\text{I.V. (THN)} = 0.87 \times \text{I.V. (TCB)}$$

The ethylene content of the TCB soluble amorphous fraction (C2 TCB-Sol) was also determined.

**Determination of donors**

The content of electron donor has been carried out via gas-chromatography.

**Determination of Melt flow rate (MFR)**

The melt flow rate MIL of the polymer was determined according to ISO 1133 (230 °C, 2.16 Kg).

**Determination of impact strength**

Charpy impact test according to ISO 179-1eA, e ISO 1873-2.

**Determination of Flexural Modulus**

Flexural Modulus according to ISO 178 and supplemental conditions according to ISO 1873-2.

**Determination of Long Time Creep behavior**

Long Time Creep behavior was evaluated according to an internal method, by measuring the flexural creep strain as a function of applied stress at constant temperature. Flexural three point bending tests were performed on rectangular specimens (12.7 x 120 x 3.1 mm) obtained by cutting injection molded plaques (250 x 150 x 3.1 mm) transversely to injection flow. Support span was 60 mm wide.

After 1 h conditioning at 23 °C the tests were performed by applying a constant load on the specimen for all the length of the test and recording the curve of load application point vs. time.

Strain vs. time curves were obtained by evaluating, according to the theory of elastic beams, the nominal strain on specimen outer surface from the measured displacement and the nominal stress from the applied force.

Values of nominal stress were in the range 12 - 15 MPa and, for each nominal stress, the time needed to reach 4 % of nominal strain was taken from the strain vs. time curve of each sample.

These values were used to obtain stress vs. time graphs, the experimental points were fitted with logarithmic curves and the fitting equations were used to extrapolate the time needed to reach 4 % of strain with a nominal stress

of 10 MPa. These time values are reported in Table 3.

EXAMPLES

**General procedure for the preparation of $MgCl_2$●$(EtOH)_m$ adducts**

An initial amount of microspheroidal $MgCl_2 \cdot 2.8C_2H_5OH$ was prepared according to the method described in Example 2 of USP 4,399,054 but operating at 3,000 rpm instead of 10,000. The so obtained adduct having an average particle size of 60 μm was then subject to thermal dealcoholation at increasing temperatures from 30 to 130°C operating in nitrogen current until the molar alcohol content per mol of Mg is 2.0.

**Preparation of solid catalyst component - general procedure**

Into a 1000 mL four-necked round flask, purged with nitrogen, 500 mL of $TiCl_4$ were introduced at 0°C. While stirring, 30 grams of the microspheroidal $MgCl_2 \cdot 2.0C_2H_5OH$ adduct (prepared as described above) were added. Then, an amount of 9,9-bis(methoxymethyl)fluorene and, successively, an amount of 5-(tert-butyl)-3-methyl-1,2-phenylene bis(diethylcarbamate) such as to have a Mg/DE and Mg/DC molar ratio reported in Table 1 were charged.

The temperature was raised to 100°C and kept at this value for 60 minutes. After the mentioned 60 minutes, the stirring was stopped, the liquid siphoned off and the treatment with $TiCl_4$ was repeated at 110°C for 30 minutes. After that time the stirring was stopped, the liquid siphoned off and the treatment with $TiCl_4$ was repeated at 110°C for 15 min. After sedimentation and siphoning of the liquid phase the solid was washed four times with anhydrous heptane (6 x 100 ml) at 90 °C and twice with hexane at room temperature. The characterization of the so obtained solid catalytic component is reported in Table 1.

**General procedure for the homo-polymerization of propylene in bulk**

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, a suspension containing 75 ml of anhydrous hexane, 0.76 g of $AlEt_3$, 76 mg of dicyclopentyldimethoxysilane (D donor) and about 6 mg of solid catalyst component was charged. The autoclave was closed and 2NL of hydrogen was added. Then, under stirring, 1.2 kg of liquid propylene was fed. The temperature was raised to 70°C in ten minutes and the polymerization was carried out at this temperature for two hours. At the end of the polymerization, the non-reacted propylene was removed; the polymer was recovered and dried in an oven at 80°C.

**General procedure for the random copolymerization of ethylene and propylene**

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, a suspension containing 75 ml of anhydrous hexane, 0.76 g of $AlEt_3$, 76 mg of dicyclopentyldimethoxysilane (D donor) and about 3-4 mg of solid catalyst component was charged. The autoclave was closed and 0.9 NL of $H_2$ was added. The stirrer was started and propylene (1.2 kg) was fed to the autoclave at 30 °C in about 2 minutes. The autoclave was warmed up to 68 °C in about 10 minutes and, in the same time, 10 g of ethylene was added with a fixed feeding rate in order to complete the feeding as soon as the target polymerization temperature is reached. The polymerization was carried out at 70 °C for 1 hour and ethylene was continuously added during this time in order to keep constant the internal autoclave pressure. At the end the monomers were vented off. After the complete venting of monomers, the polymer was recovered and dried under vacuum in an oven at 80°C.

**General procedure for the preparation of a heterophasic copolymer of propylene and ethylene**

A 4 liters steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, a suspension containing 75 ml of anhydrous hexane, 0.76 g of $AlEt_3$, 76 mg of dicyclopentyldimethoxysilane (D donor) and about 5-16 mg of solid catalyst component (depending on the type of catalyst) was charged. The autoclave was closed, then an amount of hydrogen (values are collected in Tables 4a and 5a) was added. Finally, 1.2 kg of liquid propylene were fed in 2 minutes under continuous stirring. The temperature was raised to 70°C in 10 - 11 minutes and the polymerization was carried out at this temperature for the time needed to reach the desired split (see Table 4a or 5a). At the end of this polymerization step, the non-reacted propylene was removed in about 3 minutes: during venting, the internal temperature was kept at 55 - 65 °C by setting the jacket temperature at 70 °C.

The procedure for the gas phase reaction was then started: the content of the autoclave was warmed to the reported temperature (Table 4a or 5a) and, in the same time, ethylene, propylene and hydrogen were fed (compositions collected in 4a or 5a). The feeding conditions were chosen in order to reach simultaneously the set internal autoclave temperature and the end of monomer feeding. This moment was defined as the starting time of gas phase copolymerization. The transition step time was about 10 minutes. The copolymerization was conducted by feeding ethylene and propylene mixture in a wt/wt ratio equal to 50 %wt to keep the pressure constant at the value measured at the end of temperature increasing.

The polymerization was stopped when the target copolymer split (amount of copolymer in the final HECO sample) was obtained. This value was evaluated using the amount of monomers fed during the gas phase polymerization (experimental) and from the amount of homopolymer made in the liquid phase polymerization (estimated from catalyst mileage, determined in a separate homopolymer run, and the amount of solid catalyst component added to the autoclave. At the end, the monomers were vented off while the autoclave was cooled down to 30°C. After the complete venting of monomers, the polymer was recovered and dried under vacuum in an oven overnight at 80°C. Characterization data of the homopolymer runs as well as of the final copolymers are reported in Table 4b or 5b.

**Examples 1-3 and comparative examples 1-4**

Solid catalyst precursors of examples 1-3 (inventive) were prepared in accordance with the general procedure described above. The same procedure was adopted for solid catalyst precursors of comparative examples 1 using different amounts of donor. In comparative example 2 only diether was used. In comparative 3 the internal donor was diisobutylphthalate, while in comparative example 4 diethyl 2,3-diisopropylsuccinate was used instead of the dicarbamate donor. The catalyst characterization is reported in Table 1.

**Table 1**

| Ex | Catalyst Synthesis | | Catalyst characterization | | |
|---|---|---|---|---|---|
| | Mg/DC | Mg/DE | Ti | ID total | DE/DC |
| | mole ratio | mole ratio | wt% | wt% | molar |
| 1 | 36 | 7.2 | 4.7 | 15.0 | 4.7:1 |
| 2 | 59 | 6.7 | 4.8 | 16.9 | 8.1:1 |
| 3 | 94 | 6.2 | 4.8 | 14.9 | 14:1 |
| C1 | 32 | 7.1 | 4.5 | 16.0 | 4.2:1 |
| C2 | - | 6.0 | 4.7 | 13.6 | - |
| C3 | Mg/DIBP = 10 | | 2.7 | 11.3 | - |
| C4 | Mg/Succinate = 13<br>Mg/DE = 26 | | 3.1 | 10.4 | - |
| n.d. = not determined | | | | | |

**Bulk polymerization of propylene**

The above listed solid catalyst components were used for the homo-polymerization of propylene in bulk phase, using the general method described above. The results of the polymerization runs are given in Table 2 below.

**Table 2. Results of homo-polymerization in bulk propylene**

| Ex | Mileage | XI | MIL |
|---|---|---|---|
| | kg/g | %wt | g/10' |
| 1 | 88.1 | 99.0 | 2.3 |
| 2 | 101.5 | 98.7 | 3.5 |
| 3 | 106.5 | 98.7 | 5.2 |
| C1 | 80.2 | 98.7 | 2.8 |

(continued)

| Ex | Mileage | XI | MIL |
|---|---|---|---|
| | kg/g | %wt | g/10' |
| C2 | 88.5 | 98.3 | 7.5 |
| C3 | 63.0 | 98.5 | 2.0 |
| C4 | 70.0 | 98.5 | 4.5 |
| External donor: D - dicyclopentyldimethoxysilane | | | |

**Random copolymerization of ethylene and propylene**

A selection of the above mentioned solid catalyst components were used for the random copolymerization of ethylene and propylene, using the general method for random copolymerization described above.

The catalysts used, and the characterization results obtained, are listed in Table 3.

**Table 3. Random propylene/ethylene copolymer characterization**

| Catalyst of Example | Polymer type | XI | MIL | Ethylene | *Long Time Creep behavior (1)* |
|---|---|---|---|---|---|
| | | %wt | g/10' | %wt | days |
| 2 | | 91.5 | 0.29 | 4.3 | 2833 |
| C1 | | 91.3 | 0.30 | 4.4 | 1375 |
| - | Hostalen PP H5416 | 90.6 | 1.1 | 4.4 | 1113 |
| (1) Time (extrapolated value) to reach 4 % of strain under 10 MPa of flexural nominal stress | | | | | |

**High fluidity Heterophasic polymer composition**

The term "high fluidity" means polymer compositions with final MFR of about 20 or higher. The compositions have been prepared according to general method for heterophasic copolymer described above. The catalysts used, and the characterization results obtained, are listed in Table 4 below.

**Table 4a. Synthesis of high fluidity heterophasic compositions**

| | First Step (Propylene Polymerization) | | | Second Step (Gas Phase Copolymerization) | | | | | | | |
|---|---|---|---|---|---|---|---|---|---|---|---|
| Solid Comp | Time | $H_2$ | Mileage estimated | Temperature | Time | Ethylene | Propylene | Hydrogen | Pressure | Mileage | Split HOMO/COPO |
| | min | NL | Kg/g | °C | min | g | g | NL | barg | Kg/g | % wt |
| 1 | 30 | 10.5 | 58.1 | 70 | 74 | 58 | 106 | 3.0 | 24.7 | 89.3 | 65 / 35 |
| 2 | 30 | 10.0 | 62.7 | 70 | 56 | 50 | 115 | 2.5 | 23.3 | 96.5 | 65 / 35 |
| 3 | 30 | 9.5 | 54.2 | 70 | 123 | 50 | 115 | 5.0 | 25.1 | 79.7 | 68 / 32 |
| C1 | 30 | 11.5 | 19.1 | 70 | 35 | 66 | 106 | 2.0 | 22.9 | 47.0 | 62 / 38 |
| C3 | 60 | 22.0 | 43.7 | 80 | 57 | 60 | 105 | 2.0 | 22.3 | 71.6 | 61 / 39 |

**Table 4b. Characterization of high fluidity heterophasic compositions**

| | Characterization of Homopolymer run | | Characterization of final composition | | | | | | |
|---|---|---|---|---|---|---|---|---|---|
| | | | | | | Crystex QC Soluble Fraction | | | |
| Solid Comp | MIL | XI | Ethylene | MIL | XS | Ethylene | IV-THN | Charpy 23 °C | Flexural Modulus |
| | g/10' | % wt | % wt | g/10' | % | %wt | g/dL | kJ/$mm^2$ | N/$mm^2$ |
| 1 | 85 | 98.3 | 19.2 | 23.1 | 27.2 | 46.0 | 2.97 | 50.8 | 870 |
| 2 | 99 | 98.1 | 17.9 | 21.7 | 28.0 | 41.3 | 2.58 | 40.4 | 830 |
| 3 | 80 | 97.8 | 16.5 | 30.3 | 25.1 | 45.1 | 2.54 | 20.4 | 820 |
| C1 | 110 | 98.1 | 18.0 | 29.2 | 30.9 | 44.8 | 2.38 | 12.3 | 890 |
| C3 | 106 | 98.2 | 20.1 | 21.0 | 28.0 | 46.1 | 2.56 | 15.7 | 800 |

**Low fluidity Heterophasic polymer composition**

The term "low fluidity" designates polymer compositions with final MFR of less than 20 g/10'. The polymer compositions have been prepared according to general method for heterophasic copolymer described above. The catalysts used, and the characterization results obtained, are listed in Table 5 below.

**Table 5a. Synthesis of low fluidity heterophasic compositions**

| | First Step (Propylene Polymerization) | | | Second Step (Gas Phase Copolymerization) | | | | | | | |
|---|---|---|---|---|---|---|---|---|---|---|---|
| Solid Comp | Time | $H_2$ | Mileage estimated | Temperature | Time | Ethylene | Propylene | Hydrogen | Pressure | Mileage | Split HOMO/COPO |
| | min | NL | Kg/g | °C | min | g | g | NL | barg | Kg/g | % wt |
| 1 | 60 | 5.8 | 66.0 | 80 | 200 | 66 | 106 | 1.60 | 20.8 | 95.7 | 31 |
| 2 | 90 | 5.3 | 55.4 | 80 | 150 | 66 | 95 | 1.10 | 19.4 | 76.9 | 28 |
| 3 | 30 | 9.5 | 53.4 | 70 | 70 | 50 | 115 | 1.75 | 22.8 | 83.5 | 36 |
| C1 | 30 | 11.5 | 19.6 | 70 | 32 | 66 | 106 | 0.30 | 22.4 | 47.8 | 38 |
| C2 | 90 | 4.0 | 44.1 | 80 | 51 | 66 | 106 | 0.50 | 18.0 | 60.4 | 27 |
| C3 | 90 | 8.5 | 46.9 | 80 | 28 | 60 | 105 | 2.30 | 22.5 | 65.1 | 28 |

**Table 5b. Characterization of low fluidity heterophasic compositions**

| | Characterization of Homopolymer run | | Characterization of final composition | | | | | | |
|---|---|---|---|---|---|---|---|---|---|
| | | | | | | Crystex QC Soluble Fraction | | | |
| Solid Comp | MIL | XI | Ethylene | MIL | XS | Ethylene | IV-THN | Charpy 23 °C | Flexural Modulus |
| | g/10' | % wt | % wt | g/10' | % | %wt | g/dL | kJ/mm2 | N/mm2 |
| 1 | 21.3 | 98.7 | 15.2 | 11.6 | 24.0 | 40.0 | 2.22 | 46.0 | 900 |
| 2 | 22.5 | 98.4 | 11.8 | 11.1 | 21.8 | 36.4 | 2.16 | 45.7 | 940 |
| 3 | 80.1 | 97.8 | 17.2 | 16.0 | 30.8 | 44.9 | 2.88 | 68.0 | 720 |
| C1 | 110 | 98.1 | 19.2 | 11.8 | 29.7 | 45.9 | 4.74 | 13.0 | 880 |
| C2 | 22.7 | 97.9 | 11.5 | 11.1 | 23.0 | 39.7 | 2.26 | 20.9 | 760 |
| C3 | 20.2 | 98.4 | 12.9 | 10.7 | 22.9 | 41.9 | 2.18 | 30.0 | 890 |

**Claims**

1. A solid catalyst component for the polymerization of olefins comprising a magnesium halide, a titanium compound having at least a Ti-halogen bond and at least two electron donor compounds one of which being selected from 1,3 diethers (DE) and the other being selected from dicarbamates (DC), said catalyst component being **characterized by** the fact that said electron donor compounds are present in a molar ratio DE:DC ranging from 4.5:1 to 20:1.

2. The solid catalyst component according to claim 1 in which the DE:DC molar ratio ranges from 5:1 to 15:1.

3. The solid catalyst component according to claim 1 in which the DE:DC molar ratio ranges from 7:1 to 10:1.

4. The solid catalyst component according to claim 1 in which the molar ratio between total amounts of donors DE+DC and the Ti atoms (DE+DC):Ti ratio ranges from 0.3:1 to 1: 1.

5. The solid catalyst component according to claim 1 having a porosity of at least 0.150 $cm^3/g$, wherein the porosity is measured according to a mercury method based on the solid catalyst components having pores with radius equal to or less than 1 μm.

6. The solid catalyst component according to any one of the preceding claims in which the dicarbamate has the formula (I) below :

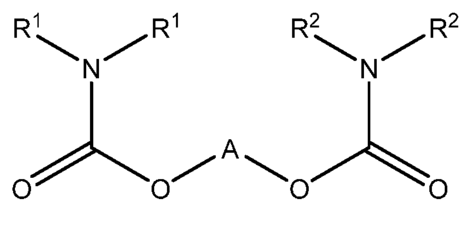

(I)

where $R^1$ and $R^2$, independently, are selected from hydrogen and $C_1$-$C_{15}$ hydrocarbon groups, optionally contain a heteroatom selected from halogen, P, S, N, O and Si, which can be fused together to form one or more cycles and A is a bivalent bridging group.

**7.** The solid catalyst component according to claim 6 in which A is a bivalent bridging group with chain length between the two bridging bonds being 1-10 atoms.

**8.** The solid catalyst component according to claim 7 in which the dicarbamate has the formula (II) below

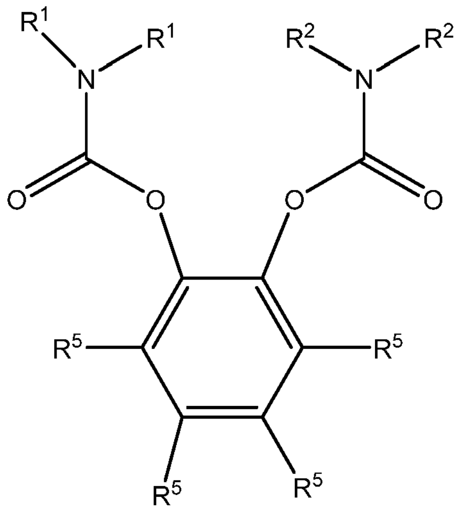

(II)

In which $R^1$ and $R^2$ have the same meaning previously specified, and $R^5$, independently, is selected from hydrogen, halogens or $C_1$-$C_{15}$ hydrocarbon groups optionally substituted with heteroatoms selected from halogen, P, S, N, O and Si, with the proviso that at least one of $R^5$ is different from hydrogen.

**9.** The solid catalyst component according to claim 1 in which the 1,3-diethers have the formula (III) below

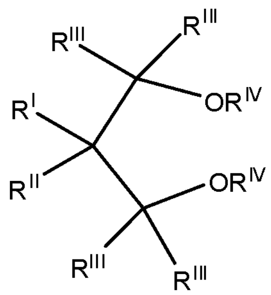

(III)

where $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

**10.** The solid catalyst component of claim 9 in which the 1,3-diethers have formula (V) below

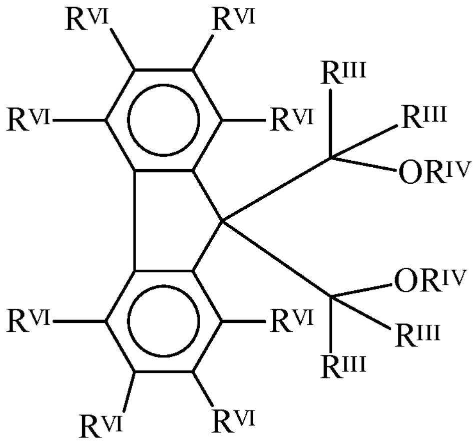

(V)

where the $R^{VI}$ radicals equal or different are hydrogen; halogens; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ arylalkyl radicals, optionally containing one or more heteroatoms selected from the group consisting of N, 0, S, P, Si and halogens, in particular Cl and F, as substitutes for carbon or hydrogen atoms, or both; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen.

**11.** Catalyst components according to any of the preceding claims comprising a titanium compound having at least a Ti-halogen bond and the at least two different electron donor compounds supported on a Mg halide in active form.

**12.** Catalyst for the polymerization of olefins $CH_2$=CHR, in which R is hydrogen or a hydrocarbyl radical with 1-12 carbon atoms, comprising the product of the reaction between:

(i) the solid catalyst component according to any of the preceding claims and
(ii) an alkylaluminum compound.

**13.** The catalyst according to claim 12 further comprising an external electron donor compound.

**14.** The catalyst according to claim 13 in which the external electron donor compound is selected from silicon compounds of formula $R_a^5R_b^6Si(OR^7)_c$, where a and b are integers from 0 to 2, c is an integer from 1 to 4 and the sum (a+b+c) is 4; $R^5$, $R^6$ and $R^7$ are alkyl, cycloalkyl or aryl radicals with 1-18 carbon atoms optionally containing heteroatoms.

**15.** A process for the (co)polymerization of olefins $CH_2$=CHR, in which R is hydrogen or a hydrocarbyl radical with 1-12 carbon atoms, carried out in the presence of a catalyst comprising the product of the reaction between:

(i) the solid catalyst component of the preceding claims;
(ii) an alkylaluminum compound and,
(iii) optionally an electron-donor compound (external donor).

**Patentansprüche**

**1.** Feste Katalysatorkomponente zur Polymerisierung von Olefinen, umfassend ein Magnesiumhalogenid, eine Titanverbindung mit mindestens einer Ti-Halogen-Bindung, und mindestens zwei Elektronendonorverbindungen, von denen eine aus 1,3-Diethern (DE) ausgewählt ist und die andere aus Dicarbamaten (DC) ausgewählt ist, wobei die Katalysatorkomponente durch die Tatsache gekennzeichnet ist, dass die Elektronendonorverbindungen in einem molaren Verhältnis DE:DC im Bereich von 4,5:1 bis 20:1 vorhanden sind.

**2.** Feste Katalysatorkomponente nach Anspruch 1, wobei das molare Verhältnis von DE:DC im Bereich von 5:1 bis 15:1 liegt.

**3.** Feste Katalysatorkomponente nach Anspruch 1, wobei das molare Verhältnis von DE:DC im Bereich von 7:1 bis 10:1 liegt.

**4.** Feste Katalysatorkomponente nach Anspruch 1, wobei das molare Verhältnis zwischen Gesamtmengen der Donoren DE+DC und der Ti-Atome, das Verhältnis (DE+DC):Ti, im Bereich von 0,3:1 bis 1: 1 liegt.

**5.** Feste Katalysatorkomponente nach Anspruch 1 mit einer Porosität von mindestens 0,150 $cm^3/g$, wobei die Porosität gemäß einem Quecksilberverfahren basierend auf den festen Katalysatorkomponenten mit Poren mit einem Radius gleich oder kleiner als 1 μm gemessen wird.

**6.** Feste Katalysatorkomponente nach einem der vorhergehenden Ansprüche, wobei das Dicarbamat die folgende Formel (I) hat:

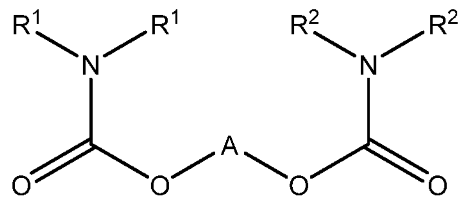

(I)

wobei $R^1$ und $R^2$ unabhängig ausgewählt sind aus Wasserstoff und $C_1$-$C_{15}$-Kohlenwasserstoffgruppen, die gegebenenfalls ein Heteroatom ausgewählt aus Halogen, P, S, N O oder Si enthalten, die miteinander kondensiert sein können, um einen oder mehrere Cyclen zu bilden, und wobei A eine zweiwertige Brückengruppe ist.

**7.** Feste Katalysatorkomponente nach Anspruch 6, wobei A eine zweiwertige Brückengruppe ist, wobei die Kettenlänge zwischen den beiden Brückenbindungen 1 bis 10 Atome beträgt.

**8.** Feste Katalysatorkomponente nach Anspruch 7, wobei das Dicarbamat die folgende Formel (II) hat:

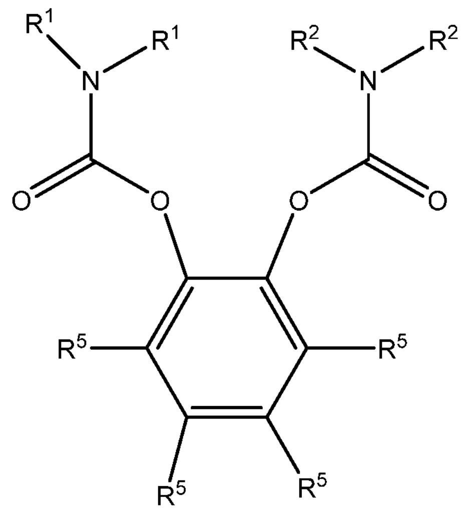

(II)

wobei $R^1$ und $R^2$ die gleiche Bedeutung wie zuvor spezifiziert haben, und $R^5$ unabhängig ausgewählt ist aus Wasserstoff, Halogenen oder $C_1$-$C_{15}$-Kohlenwasserstoffgruppen, die gegebenenfalls mit Heteroatomen ausgewählt aus Halogen, P, S, N, O und Si substituiert sind, mit der Maßgabe, dass mindestens ein $R^5$ sich von Wasserstoff unterscheidet.

**9.** Feste Katalysatorkomponente nach Anspruch 1, wobei die 1,3-Diether die folgende Formel (III) haben:

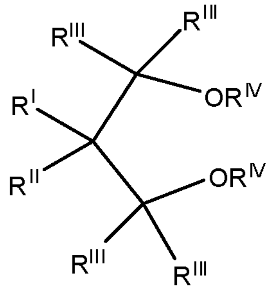

(III)

wobei $R^I$ und $R^{II}$ gleich oder unterschiedlich sind und Wasserstoff oder lineare oder verzweigte Ci-Cis-Kohlenwasserstoffgruppen sind, die auch eine oder mehrere cyclische Strukturen bilden können; Gruppen $R^{III}$, die gleich oder voneinander verschieden sind, Wasserstoff oder Ci-Cis-Kohlenwasserstoffgruppen sind; Gruppen $R^{IV}$, die gleich oder voneinander verschieden sind, die gleiche Bedeutung wie $R^{III}$ haben, außer dass sie nicht Wasserstoff sein können; jede der Gruppen $R^I$ bis $R^{IV}$ Heteroatome ausgewählt aus Halogenen, N, O, S und Si enthalten kann.

**10.** Feste Katalysatorkomponente nach Anspruch 9, wobei die 1,3-Diether die folgende Formel (V) haben:

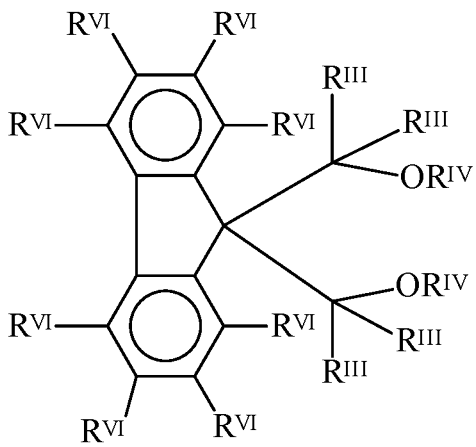

(V)

wobei die Reste $R^{VI}$, die gleich oder unterschiedlich sind, Wasserstoff; Halogene; lineare oder verzweigte $C_1$-$C_{20}$-Alkylreste, $C_3$-$C_{20}$-Cycloalkyl-, $C_6$-$C_{20}$-Aryl, $C_7$-$C_{20}$-Alkylaryl- und $C_7$-$C_{20}$-Arylalkylreste sind, die gegebenenfalls ein oder mehrere Heteroatome ausgewählt aus der Gruppe bestehend aus N, O, S, P, Si und Halogenen, insbesondere Cl und F, als Substitute für Kohlenstoff- oder Wasserstoffatome enthalten, oder beides; Gruppen $R^{III}$, die gleich oder voneinander verschieden sind, Wasserstoff oder Ci-Cis-Kohlenwasserstoffgruppen sind; Gruppen $R^{IV}$, die gleich oder voneinander verschieden sind, die gleiche Bedeutung wie $R^{III}$ haben, außer dass sie nicht Wasserstoff sein können.

**11.** Katalysatorkomponenten nach einem der vorhergehenden Ansprüche, umfassend eine Titanverbindung mit mindestens einer Ti-Halogen-Bindung und die mindestens zwei unterschiedlichen Elektronendonorverbindungen, geträgert auf einem Mg-Halogenid in aktiver Form.

**12.** Katalysator zur Polymerisierung von Olefinen $CH_2$=CHR, wobei R Wasserstoff oder ein Kohlenwasserstoffrest mit 1 bis 12 Kohlenstoffatomen ist, umfassend das Produkt der Reaktion zwischen:

(i) der festen Katalysatorkomponente nach einem der vorhergehenden Ansprüche und
(ii) einer Alkylaluminiumverbindung.

**13.** Katalysator nach Anspruch 12, des Weiteren umfassend eine externe Elektronendonorverbindung.

**14.** Katalysator nach Anspruch 13, wobei die externe Elektronendonorverbindung ausgewählt ist aus Siliciumverbindungen der Formel $R_a^5R_b^6Si(OR^7)_c$, wobei a und b ganze Zahlen von 0 bis 2 sind, c eine ganze Zahl von 1 bis 4 ist, und die Summe (a+b+c) 4 ist; $R^5$, $R^6$ und $R^7$ Alkyl-, Cycloalkyl- oder Arylreste mit 1 bis 18 Kohlenstoffatomen sind, die gegebenenfalls Heteroatome enthalten.

**15.** Verfahren zur (Co)Polymerisierung von Olefinen $CH_2$=CHR, worin R Wasserstoff oder ein Kohlenwasserstoffrest mit 1 bis 12 Kohlenstoffatomen ist, das in Gegenwart eines Katalysators durchgeführt wird, der das Produkt der Reaktion zwischen:

(i) der festen Katalysatorkomponente der vorhergehenden Ansprüche;
(ii) einer Alkylaluminiumverbindung und
(iii) gegebenenfalls einer Elektronendonorverbindung (externer Donor) umfasst.

## Revendications

**1.** Constituant catalytique solide pour la polymérisation d'oléfines comprenant un halogénure de magnésium, un composé de titane présentant au moins une liaison Ti-halogène et au moins deux composés donneurs d'électrons dont l'un est choisi parmi les 1,3-diéthers (DE) et l'autre est choisi parmi les dicarbamates (DC), ledit constituant catalytique étant **caractérisé en ce que** lesdits composés donneurs d'électrons sont présents dans un rapport molaire DE:DC situé dans la plage de 4,5:1 à 20: 1.

**2.** Constituant catalytique solide selon la revendication 1, dans lequel le rapport molaire DE:DC est situé dans la plage de 5:1 à 15:1.

**3.** Constituant catalytique solide selon la revendication 1, dans lequel le rapport molaire DE:DC est situé dans la plage de 7: 1 à 10: 1.

**4.** Constituant catalytique solide selon la revendication 1, dans lequel le rapport molaire entre les quantités totales de donneurs DE+DC et les atomes de Ti (DE+DC):Ti est situé dans la plage de 0,3:1 à 1:1.

**5.** Constituant catalytique solide selon la revendication 1, présentant une porosité d'au moins 0,150 $cm^3/g$, la porosité étant mesurée selon un procédé au mercure basé sur les constituants catalytiques solides présentant des pores pourvus d'un rayon égal ou inférieur à 1 $\mu$m.

**6.** Constituant catalytique solide selon l'une quelconque des revendications précédentes, le dicarbamate présentant la formule (I) ci-dessous :

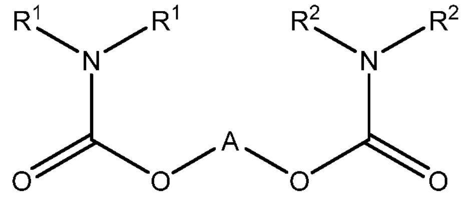

(I)

où $R^1$ et $R^2$, indépendamment, sont choisis parmi hydrogène et les groupes hydrocarbonés en $C_1$-$C_{15}$, contiennent éventuellement un hétéroatome choisi parmi halogène, P, S, N, O et Si, qui peuvent être fusionnés ensemble pour former un ou plusieurs cycles et A représente un groupe de pontage bivalent.

**7.** Constituant catalytique solide selon la revendication 6, dans lequel A représente un groupe de pontage bivalent présentant une longueur de chaîne entre les deux liaisons de pontage de 1 à 10 atomes.

8. Constituant catalytique solide selon la revendication 7, dans lequel le dicarbamate présente la formule (II) ci-dessous

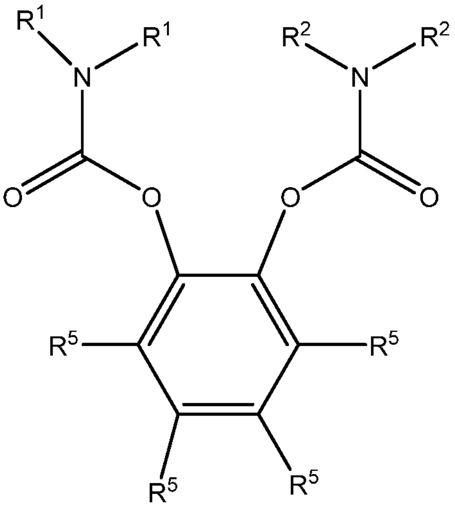

(II)

dans laquelle $R^1$ et $R^2$ présentent la même signification que celle précédemment spécifiée et $R^5$, indépendamment, est choisi parmi hydrogène, les halogènes ou les groupes hydrocarbonés en $C_1$-$C_{18}$ éventuellement substitués par des hétéroatomes choisis parmi halogène, P, S, N, O et Si, à condition qu'au moins l'un des $R^5$ soit différent d'hydrogène.

9. Constituant catalytique solide selon la revendication 1, dans lequel les 1,3-diéthers présentent la formule (III) ci-dessous

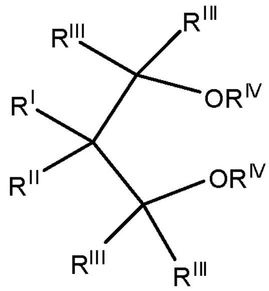

(III)

où $R^I$ et $R^{11}$ sont identiques ou différents et représentent hydrogène ou des groupes hydrocarbonés en Ci-Cis linéaires ou ramifiés qui peuvent également former une ou plusieurs structures cycliques ; les groupes $R^{III}$, identiques ou différents les uns des autres, représentent hydrogène ou des groupes hydrocarbonés en Ci-Cis ; les groupes $R^{IV}$, identiques ou différents l'un de l'autre, présentent la même signification que celle de $R^{III}$, à l'exception qu'ils ne peuvent pas représenter hydrogène ; chacun des groupes $R^I$ à $R^{IV}$ peut contenir des hétéroatomes choisis parmi les halogènes, N, O, S et Si.

10. Constituant catalytique solide selon la revendication 9, dans lequel les 1,3-diéthers présentent la formule (V) ci-dessous

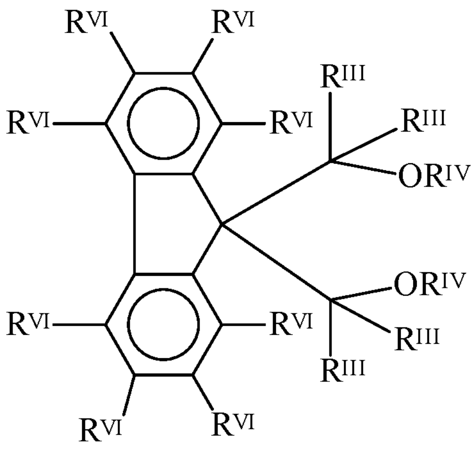

(V)

où les radicaux $R^{VI}$, identiques ou différents, représentent hydrogène ; des halogènes ; des radicaux alkyle en $C_1$-$C_{20}$ linéaires ou ramifiés ; cycloalkyle en $C_3$-$C_{20}$, aryle en $C_6$-$C_{20}$, alkylaryle en $C_7$-$C_{20}$ et arylalkyle en $C_7$-$C_{20}$, contenant éventuellement un ou plusieurs hétéroatomes choisis dans le groupe constitué par N, O, S, P, Si et les halogènes, en particulier Cl et F, en tant que substituts pour des atomes de carbone ou d'hydrogène, ou les deux ; les groupes $R^{III}$, identiques ou différents les uns des autres, représentent hydrogène ou des groupes hydrocarbonés en Ci-Cis ; les groupes $R^{IV}$, identiques ou différents l'un de l'autre, présentent la même signification que celle pour $R^{III}$, à l'exception qu'ils ne peuvent pas représenter hydrogène.

**11.** Constituants catalytiques selon l'une quelconque des revendications précédentes, comprenant un composé de titane présentant au moins une liaison Ti-halogène et lesdits au moins deux composés donneurs d'électrons différents supportés sur un halogénure de Mg sous forme active.

**12.** Catalyseur pour la polymérisation d'oléfines $CH_2$=CHR, dans lesquelles R représente hydrogène ou un radical hydrocarbyle comprenant 1 à 12 atomes de carbone, comprenant le produit de la réaction entre :

(i) le constituant catalytique solide selon l'une quelconque des revendications précédentes et
(ii) un composé d'alkylaluminium.

**13.** Catalyseur selon la revendication 12, comprenant en outre un composé donneur d'électrons externe.

**14.** Catalyseur selon la revendication 13, dans lequel le composé donneur d'électrons externe est choisi parmi les composés de silicium de formule $R_a^5R_b^6Si(OR^7)_c$, où a et b représentent des nombres entiers de 0 à 2, c représente un nombre entier de 1 à 4 et la somme (a+b+c) vaut 4 ; $R^5$, $R^6$ et $R^7$ représentent des radicaux alkyle, cycloalkyle ou aryle comprenant 1 à 18 atomes de carbone contenant éventuellement des hétéroatomes.

**15.** Procédé de (co)polymérisation d'oléfines $CH_2$=CHR, dans lesquelles R représente hydrogène ou un radical hydrocarbyle comprenant 1 à 12 atomes de carbone, réalisé en présence d'un catalyseur comprenant le produit de la réaction entre :

(i) le constituant catalytique selon les revendications précédentes ;
(ii) un composé d'alkylaluminium et
(iii) éventuellement un composé donneur d'électrons (donneur externe).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 361494 A2
- EP 728769 A1
- US 2014275451 A1
- US 4399054 A
- US 4469648 A

### Non-patent literature cited in the description


- **C. J. CARMAN ; R. A. HARRINGTON ; C. E. WILKES.** Monomer Sequence Distribution in Ethylene-Propylene Rubber Measured by C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **HUGGINS, M.L.** *J. Am. Chem. Soc.,* 1942, vol. 64, 2716
- **B. MONRABAL ; P. DEL HIERRO.** Soluble Fraction Analysis in Polypropylene for Quality Control Laboratories. *The Application Notebook,* 02 December 2013, 709-710